# EUROPÄISCHE PATENTSCHRIFT

(11) **EP 0 540 853 B1**
(45) Veröffentlichungstag und Bekanntmachung des Hinweises auf die Patenterteilung: **13.12.1995**
(21) Anmeldenummer: 92115400.1
(22) Anmeldetag: 09.09.1992
(51) Int. Cl.: G01M 3/10, B67B 3/26

(54) **Verfahren zum Feststellen der Dichtigkeit von Behältnissen wie Flaschen, Dosen, Fässern, Kästen mit Flaschen, Kästen mit Dosen oder dergleichen, die mit durch ein Gas versetzten Getränken, z. B. mit Säften, Cola, Bier, Limonaden oder dergleichen gefüllt sind und mit einem geeignetem Verschluss abgedichtet und verschlossen sind und Einrichtung zum Durchführen des Verfahrens**
Procedure and device for leak testing of closed containers, filled with a gas-containing beverage
Procédé et dispositif de contrôle de l'étanchéité de récipients fermés, remplis d'une boisson contenant du gaz

(30) Priorität: 06.11.1991 DE 4136472
(43) Veröffentlichungstag der Anmeldung: 12.05.1993
(73) Patentinhaber: CC KONTROLLANLAGEN GmbH, D-57258 Freudenberg (DE)
(72) Erfinder: Wagener, Edgar, W-5241 Wallmenroth (DE); Steindreischer, Reinhard, W-5921 Hilschenbach (DE)
(74) Vertreter: Beyer, Rudi

(56) Entgegenhaltungen:
- DE-A- 1 158 287
- US-A- 3 950 982
- PATENT ABSTRACTS OF JAPAN vol. 8, no. 188 (P-297)(1625) 29. August 1984 & JP-A-59 77 330 (MITSUBISHI)

## Beschreibung

Die Erfindung betrifft ein Verfahren zum Feststellen der Dichtigkeit von Behältnissen wie Flaschen, Dosen, Fässer oder dergleichen, die mit durch ein Gas versetzten Getränken, zum Beispiel mit Säften, Cola, Bier, Limonaden oder dergleichen gefüllt und mit einem geeigneten Verschluß abgedichtet und verschlossen sind.

Des weiteren betriffl die Erfindung eine Einrichtung zum Durchführen des Verfahrens.

Zum Stande der Technik zählen zahlreiche Vorrichtungen, mittels derer es möglich ist, im industriellen Bereich sämtliche Flaschen an einer Erkennungsstation, zum Beispiel an einem Gammakopf, durch einen Stetigförderer vorbeizutransportieren, wobei die Erkennungsstation eine Aussortiervorrichtung ansteuert, wenn die als nicht ausreichend befüllte Flasche die Aussortiervorrichtung passiert. Die Aussortiervorrichtung befördert dann den geeigneten Behälter, zum Beispiel eine Flasche, auf ein parallel daneben angeordnetes, motorisch angetriebenes Förderband, durch das die aussortierten Flaschen jeweils abtransportiert werden.

Bisher ist es aber nicht möglich, zum Beispiel solche Flaschen zu erkennen, deren Verschlüsse, zum Beispiel Kronkorken, nicht dicht sind. Derartige Flaschen passieren unerkannt die Erkennungsstation, da zu diesem Zeitpunkt ihr Befüllungsgrad, das heißt der Flüssigkeitsspiegel, auf dem vorgeschriebenen Niveau ist. Erst zu einem späteren Zeitpunkt, zum Beispiel nach dem Transport der in Kästen oder dergleichen verpackten Flaschen zeigt sich dann die Undichtigkeit zum Beispiel dadurch, daß das Gas, vornehmlich Kohlensäure, entweicht, so daß das Getränk schal wird oder gar verdirbt. Unter dem Verschluß, insbesondere unter einem Kronkorken, können sich Krankheitskeime, Schimmel oder dergleichen ansetzen, so daß erst nach dem Öffnen und bei Genuß des Getränkes festgestellt wird, daß entweder die Flache durch den Transport und durch den Austritt von Gas einen Teil ihres Inhalts verloren hat oder das Getränkt nicht mehr zu genießen ist.

Aus der GB-PS 996 830 ist ein Verfahren zum Feststellen der Dichtigkeit von Behältnissen bekannt, bei dem diese in ein Flüssigkeitsbad hineintransportiert werden.

Aus der US-PS 4 208 903 ist eine Vorrichtung bekannt, durch die eine Getränkeflasche, die mit einem mit Gas versetzten Getränk gefüllt ist, in einer aufrechten Lage in einer Testvorrichtung einspannbar ist. Die Flasche kann auf der Vorrichtung geschüttelt werden, um Temperatur und Innendruck mit einem Anzeigegerät zu messen.

Durch "Patent Abstracts of Japan", vol. 8, No. 188 (P 297 1625) 29. August 1984 & JP-A-59 77 330 (Mitsubishi) ist ein Verfahren gemäß dem Oberbegriff des Patentanspruches 1 vorbekannt. Dieses vorbekannte Verfahren ermöglicht aber nur statische Überprüfungen einzelner Behältnisse, das heißt immer nur einzelne Behältnisse werden getrennt in ein Wasserbad eingesetzt und anschließend Ultraschall-Schwingungen ausgesetzt, um die Dichtigkeit zu überprüfen. Anschließend werden die Behältnisse einzeln wieder aus dem Flüssigkeitsbad herausgenommen und durch ein anderes Behältnis ersetzt. Eine industrielle Anwendung ist hiermit nicht möglich. Vielmehr lassen sich auf diese Weise Tests, zum Beispiel im Labor, durchführen.

Die DE-A-1 158 287 beschreibt ein Verfahren zum Überprüfen der Dichtheit der Verschlüsse von mit kohlensäurehaltigen Flüssigkeiten gefüllten, verschlossenen Behältern, wobei die gefüllten und verschlossenen Behälter der Einwirkung von Ultraschall ausgesetzt werden. Zu diesem Zweck wird die Einwirkung des Ultraschalls während des Vorbeitransportes der verschlossenen Behälter an einem Ultraschallbehandlungskopf vorgenommen. Die nach der Beschallung überschäumenden, abblasenden oder schaumausspritzenden Behälter werden von Hand oder selbständig aussortiert. Zur Beschallung wird eine Frequenz von etwa 20 bis 100 kHz angewendet. Hierzu werden die verschlossenen Behälter während der Einwirkung des Ultraschalles zwangsgeführt, wobei vom Ultraschallbehandlungskopf eine Anpreßkraft auf sie ausgeübt wird. Hierzu werden die von einer Reinigungsmaschine kommenden, zum Beispiel als Flaschen ausgebildeten Behälter zunächst über einen Flaschenzuführstern in eine Flaschenmaschine transportiert, aus der sie über den Flaschenstern auch wieder heraus und auf dem Transportband zur Verschließmaschine gelangen. Die Flaschen gelangen dann auf dem Transportband zunächst durch die Flaschenabspritzvorrichtung und dann durch die aus dem Ultraschallbehandlungskopf und einem Gegenhalter bestehende Beschallungsstation. Undichte Verschlüsse lassen Schaum austreten. Solche Flaschen können an der hinter der Beschallungsstation vorgesehenen Aussortierstrecke auf ein besonderes Abtransportband überführt werden. Der Ultraschallkopf kann auch unmittelbar an der Flaschentransportbahn angeordnet sein. Auch bei Anordnung des Schallkopfes gegenüber einem Flascheneinteilstern kommt zunächst ein Vorbeigleiten der Flaschen an der Schwingplatte zustande.

Abgesehen davon, daß durch das ausschäumende Medium die Umwelt verschmutzt wird und die Förderer stets gereinigt werden müssen, bedingt diese Konstruktion auch eine genaue Einjustierung des Beschallungskopfes, wobei immer nur eine Flasche beschallt werden kann.

Aus der US-A-3 950 982 ist eine Vorrichtung vorbekannt, mittels welcher die Dichtigkeit von mit kohlensäurehaltigen Getränken oder dergleichen befüllten Behältern möglich ist. Zu diesem Zweck werden die Behälter durch einen Förderer durch einen Wassertank gefördert. Das Wasser in dem Wassertank wird erhitzt, um dadurch das in der Flüssigkeit der Behälter befindliche Gas zur Ausdehnung zu bringen. Dadurch soll der Druck in den Behältern erhöht werden, so daß undichte Verschlüsse durch Austreten schäumenden Mediums erkennbar sind.

Diese Konstruktion erfordert einen hohen Energieaufwand durch Beheizung des Bades, was problematisch bei hohen Förderleistungen im industriellen Bereich wird. Außerdem gibt es Getränke, die Erhitzen nicht ohne weiteres vertragen bzw. verdorben werden, wodurch dieses Verfahren schon eine beschränkte Anwendungsbreite aufweist.

Der Erfindung liegt die Aufgabe zugrunde, ein Verfahren gemäß der vorausgesetzten Gattung so auszugestalten, daß industriell bei allen zur Zeit im Zusammenhang mit Aussortiervorrichtungen möglichen Förderleistungen sämtliche Behältnisse, insbesondere Flaschen, hinsichtlich der Dichtigkeit ihrer Verschlüsse einer Überprüfung unterzogen werden können.

Des weiteren liegt der Erfindung die Aufgabe zugrunde, eine Einrichtung zum Durchführen dieses Verfahrens zu schaffen.

### Lösung der Aufgabe hinsichtlich des Verfahrens

Diese Aufgabe wird durch die in **Patentanspruch 1** wiedergegebenen Merkmale gelöst.

Ein erfindungsgemäßes Verfahren kann in den bisher gewohnten Förderablauf zum Befüllen und Überprüfen von Behältnissen, zum Beispiel Flaschen, ohne größere Vorarbeiten integriert werden. Hierzu werden lediglich sämtliche Behälter, insbesondere Flaschen, durch mindestens ein Flüssigkeitsbad hindurchtransportiert. Dieses Flüssigkeitsbad wird durch mindestens einen Schwinger in Schwingungen versetzt. Die Schwingungen können in einem Frequenzbereich von 8 bis 90 Kilohertz, vorzugsweise von 20 bis 40 Kilohertz, liegen, bei einer Leistung von etwa 800 bis 6000 Watt, vorzugsweise 1600 bis 3200 Watt pro Schwinger. Die Schwingungen versetzen die Flüssigkeit, die hindurchgeführten Behältnisse und dadurch die in den Behältnissen befindlichen, mit Gas, insbesondere Kohlensäure, versetzten Getränke, ebenfalls in Schwingungen. Versuche haben gezeigt, daß diese Schwingungen so klein sind, daß sie mit bloßen Auge kaum beobachtet werden können. Ein nach dem Passieren vorgenommenes Öffnen solcher Behältnisse, insbesondere Flaschen, führt zu keinem explosionsartigen Austritt der mit Gas, insbesondere Kohlensäure, versetzten Getränke, wie es sonst beim Schütteln von Flaschen gewöhnlich auftritt. Die bei dem erfindungsgemäßen Verfahren angewandten Schwingungen reichen aber aus, um das in den Getränken gelöste Gas teilweise ausperlen zu lassen. Ist ein Verschluß nicht dicht, so führt dies zu einem Austritt einer gewissen Getränkemenge, zumeist noch im Bad. Passiert ein solches Behältnis, insbesondere eine Flasche, während ihres weiteren Transports die Erkennungsstation, zum Beispiel einen Gammakopf, so führt dies anschließend zu einem Ansteuern der Aussortiervorrichtung und zu einem Ausschleusen der undichten Flasche.

Bei dem erfindungsgemäßen Verfahren ist es somit möglich, kontinuierlich sämtliche Behältnisse, insbesondere Saft-, Cola, Limonaden- und Bierflaschen, ohne Verzögerung oder Unterbrechung des normalen Produktionsablaufs einer Prüfung auf Dichtigkeit zu unterziehen. Dadurch wird sichergestellt, daß das Getränk in tadellosem, unverdorbenem und frischem Zustand beim Endverbraucher ankommt. Reklamationen aufgrund undichter Behältnisse werden eingeschränkt und auch Transportkosten herabgesetzt, weil nunmehr diejenigen Behältnisse, insbesondere Flaschen, die nicht vollständig dicht sind, gar nicht erst zum Verbraucher transportiert zu werden brauchen.

Da bei dem erfindungsgemäßen Verfahren keine stichprobenartigen Überprüfungen der Behältnisse, insbesondere Flaschen, auf Dichtigkeit vorgenommen werden, sondern hundertprozentig sämtliche Behältnisse kontinuierlich überprüft werden, ist eine hundertprozentige Kontrolle auf Dichtigkeit aller Verschlüsse sämtlicher Behältnisse gewährleistet.

Das erfindungsgemäße Verfahren ist auch umweltfreundlich, da zu seiner Durchführung die Umwelt in keiner Weise beeinträchtigt wird. Die Schwingungen verbleiben im Flüssigkeitsbad, durch das die Behältnisse hindurchgeführt werden müssen. Die in der Nähe solcher Anlagen arbeitenden Personen werden in keiner Weise gefährdet, geschädigt oder sonstwie beeinträchtigt. Besondere Schutzvorrichtungen gegen Strahlung, Austritt von Dämpfen oder Säuren sind entbehrlich. Deshalb läßt sich das erfindungsgemäße Verfahren durch Umrüsten schon bestehender Anlagen ohne weiteres auch schon an gebauten Anlagen durchführen, wenn lediglich das Wasserbad und der oder die Schwinger eingebaut werden.

Ein erfindungsgemäßes Verfahren ermöglicht auch eine hohe Produktionsleistung, weil dabei kontinuierlich auf einem Stetigförderer herangeförderte Behältnisse, insbesondere Flaschen, ohne Unterbrechung und kontinuierlich durch das Flüssigkeitsbad hindurchgeführt werden können, in dem der oder die Schwinger kontinuierlich arbeiten, so daß alle herangeförderten Behältnisse, vornehmlich Flaschen, kontinuierlich auf Dichtigkeit überprüft werden können.

### Lösung der Aufgabe hinsichtlich der erfindungsgemäßen Einrichtung

Diese Aufgabe wird durch die in **Patentanspruch 2** wiedergegebenen Merkmale gelöst.

Eine erfindungsgemäße Einrichtung ist relativ einfach aufzubauen. Der Förderweg der Behältnisse, insbesondere von Flaschen braucht lediglich etwas unter dem Badspiegel eines Flüssigkeitsbehälters gelegt zu werden, durch den dann die Behältnisse kontinuierlich durch einen Stetigförderer hindurchgeführt werden. Dieser Stetigförderer wird somit in die ohnehin vorhandene Förderbahn normalerweise eingesetzter Vorrichtungen wie sie beim Befüllen und beim Transport von Behältnissen, insbesondere von Flaschen verwendet werden, integriert. Die Flaschen brauchen somit nicht vollständig in das Flüssigkeitsbad eingetaucht oder gar unter der Flüssigkeit transportiert zu werden. Es genügt vielmehr, wenn die Behältnisse zum Beispiel zu etwa 5 bis 50 Prozent, vorzugsweise etwa 10 bis 25 Prozent ihrer Höhe in das Flüssigkeitsbad eintauchen. In diesem Falle werden auch Aufdrucke und Aufkleber geschont. Es ist aber auch möglich, derartige Aufkleber erst im Anschluß an das Durchschleusen durch das Flüssigkeitsbad auf die Behältnisse, insbesondere auf Flaschen aufzubringen.

In dem Flüssigkeitsbehälter werden vorzugsweise mehrere Schwinger angeordnet. Beispielsweise können verschiedene Schwinger paarweise sowie parallel und mit Abstand über die Breite und Länge des Flüssigkeitsbehälters und kurz unterhalb des Flüssigkeitsspiegels angeordnet werden, um die Effektivität der Schwingungen im Eintauchbereich der Behältnisse optimal ausnutzen zu können.

Als Flüssigkeit kann Wasser in Betracht kommen. Es steht dem jedoch auch nichts im Wege, eine andere geeignete Flüssigkeit vorzusehen, falls sich dies im Hinblick auf den Einsatzfall als vorteilhaft und zweckmäßig erweisen sollte. Der Vorteil von Wasser besteht sicherlich darin, daß überlaufendes Wasser ohne weiteres in das Kanalsystem ablaufen kann, da die Umwelt dadurch in keiner Weise belastet wird. Etwaige aus undichten Flaschen austretende Getränke sind ebenfalls unschädlich für die Umwelt, so daß sie gleichfalls über einen geeigneten Überlauf aus dem Flüssigkeitsbehälter ablaufen können.

Außerdem kann der Flüssigkeitsbehälter durch eine geeignete Schwimmersteuerung oder dergleichen geregelt mit Flüssigkeit befüllt gehalten werden.

Da die Behältnisse, zum Beispiel Flaschen, durch den Behälter hindurchtransportiert werden müssen, wird der Teil der Förderbahn, der sich im Bereich des Flüssigkeitsbehälters befindet, zweckmäßigerweise zum größten Teil unterhalb des Flüssigkeitsspiegels liegen, was dann auch für etwaige Umkehrstationen und Teile des Antriebes gilt. Der Motor selbst kann außerhalb des Behälters, zum Beispiel unter diesem, angeordnet sein. Auch kann die eine Welle wenigstens einer der Umkehrstationen im Bereich des einen Endes des Flüssigkeitsbehälters seitlich verlängert und zum Beispiel mit einem Kettenrad, Zahnrad oder dergleichen versehen sein, über das durch einen geeigneten Antrieb, zum Beispiel durch einen Kettenantrieb oder dergleichen die Welle des Förderers für die Flaschen oder dergleichen über einen Motor angetrieben werden kann, ohne daß diese Antriebsmittel sich im Förderbad befinden. Dadurch tritt auch kein Öl oder dergleichen in das Bad aus, so daß keinerlei Verunreinigungen der Behältnisse eintreten können. Außerdem wird dadurch beim Ablaufen der Flüssigkeit die Umwelt nicht beeinträchtigt.

Der Förderer im Bereich des Flüssigkeitsbehälters kann als Kettenförderer, Gliederförderer oder dergleichen ausgebildet sein. Derartige Förderer sind annähernd wartungsfrei und belasten die Umwelt in keiner Weise, da sie schmierungsfrei arbeiten und auch im Feuchtbereich, insbesondere unter Wasser, zu keinen Problemen führen. Außerdem können mehrere derartige Förderbänder parallel und mit Abstand nebeneinander angeordnet sein, auf denen die Behältnisse durch den Flüssigkeitsbehälter hindurch transportiert werden müssen. Dies bedingt, daß ein Teil der Förderbahn des im Flüssigkeitsbehälters liegenden Förderers unter einem spitzen Winkel bis in die Trockenebene eines Stetigförderers heranreicht, über den die befüllten und verschlossenen Behältnisse, insbesondere Flaschen, herangefördert werden. Am anderen Ende ist der im Flüssigkeitsbehälter liegende Förderer ebenso ausgebildet, tritt also unter einem spitzen Winkel mit seiner Förderbahn bis in den Trockenbereich des abfördernden Förderers ein, durch den dann die auf Dichtigkeit geprüften Flaschen oder dergleichen weitertransportiert werden.

Der Badspiegel in dem Flüssigkeitsbehälter kann regelbar ausgebildet sein, so daß für verschiedene Behältnisse eine unterschiedliche Badspiegelhöhe vorbestimmt und innerhalb gewisser Toleranzen regelbar gehalten werden kann.

Gemäß **Patentanspruch 3** ist die Höhe des Badspiegels regelbar und einstellbar ausgebildet.

Bei der Ausführungsform nach **Patentanspruch 4** ist dem Flüssigkeitsbehälter ein Überlauf zugeordnet, durch den austretende Flüssigkeit und Getränke aus undichten Flaschen ablaufen können.

Bei der Ausführungsform nach **Patentanspruch 5** ist der Antrieb als Kettenantrieb oder Bandantrieb ausgebildet, dessen Antriebsräder fliegend auf einer seitlich aus dem Bad herausgeführten Welle angeordnet sind, während sich der Motor in einer Ebene unterhalb des Flüssigkeitsbehälters befindet.

Bei der Ausführungsform nach **Patentanspruch 6** ist dem Flüssigkeitsbehälter eine seitlich zu schließende Öffnung zugeordnet, durch die der Flüssigkeitsbehälter zum Beispiel zu reinigen ist.

Gemäß **Patentanspruch 7** ist der Flüssigkeitsbehälter im Querschnitt etwa U-förmig oder rechteckartig gestaltet und besitzt eine langgestreckte, kastenförmige Form, in dessen Endbereichen die Umkehrstationen für den im Flüssigkeitsbehälter vorgesehenen Förderer oder für die Förderer angeordnet sind, wobei die Wellen der Umkehrstationen an den Seitenwänden des Flüssigkeitsbehälters - gegebenenfalls durch Verstärkungen - gelagert sind.

Bei der Ausführungsform nach **Patentanspruch 8** weist der im Flüssigkeitsbehälter angeordnete Förderer mehrere parallel und mit Abstand zueinander angeordnete Förderbänder auf, auf denen die Behältnisse durch das Flüssigkeitsbad hindurchtransportiert werden.

In den **Patentansprüchen 9** und **10** sind weitere vorteilhafte Ausführungsformen der Erfindung beschrieben.

Die austretende Flüssigkeit, zum Beispiel Bier, kann das im Flüssigkeitsbehälter befindliche Wasser entspannen, was vorteilhaft für die Ausbreitung der Schwingungen ist. Bei etwa 100.000 Flaschen/h kann der Behälter eine effektive Badlänge von 1,50 m aufweisen, wobei die Mindest-Verweildauer der Behältnisse im Flüssigkeitsbehälter beispielsweise 3 s beträgt.

In der Zeichnung ist die Erfindung - teils schematisch - an einem Ausführungsbeispiel veranschaulicht. Es zeigen:
- Fig. 1: eine Teilansicht einer erfindungsgemäßen Einrichtung;
- Fig. 2: eine Teildraufsicht zu Figur 1;
- Fig. 3: einen Längsschnitt durch eine Einrichtung gemäß der Erfindung im Bereich des Flüssigkeitsbehälters, abgebrochen dargestellt;
- Fig. 4: eine Draufsicht zu Figur 3 und
- Fig. 5: einen Teilschnitt nach der Linie V - V der Figur 4.

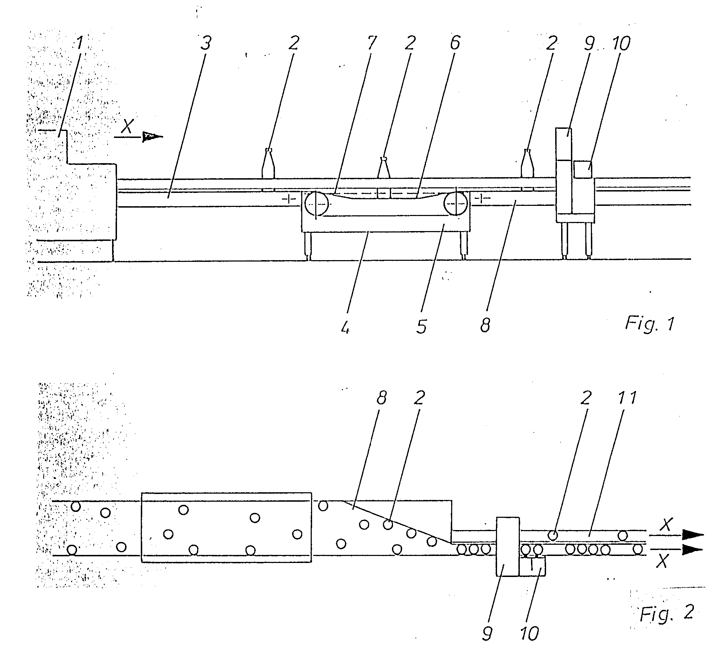

Die aus Figur 1 schematisch ersichtliche Einrichtung besteht im wesentlichen aus einer Befüllvorrichtung 1 für kontinuierlich der Befüllvorrichtung 1 zugeführte, leere Behältnisse, zum Beispiel Flaschen 2, in der die Behältnisse mit einem geeigneten Getränk, zum Beispiel Cola, Bier, Limonaden oder dergleichen befüllt und anschließend durch einen geeigneten Verschluß, zum Beispiel einen Kronkorken, verschlossen werden. Die befüllten und verschlossenen Flaschen 2 werden zum Beispiel in üblicher Weise durch einen nicht dargestellten Verteilerstern in einen geeigneten Abstand zueinander gebracht und durch einen Förderer 3 in Richtung X abtransportiert. Der Einfachheit halber ist auf dem Förderer 3 nur ein Behältnis 2, zum Beispiel eine Flasche, dargestellt. In Wirklichkeit sind hier zahlreiche Behältnisse 2 in geringem Abstand zueinander angeordnet und verlassen die Befüllvorrichtung 1 in einem stetigen Förderstrom. Die Behältnisse 2 werden von dem Förderer 3 einem Flüssigkeitsbehälter 4 zugefördert, der zum Teil mit einer geeigneten Flüssigkeit 5, zum Beispiel Wasser, gefüllt ist und zum Beispiel eine Länge von 1,50 m aufweisen kann.

In dem Flüssigkeitsbehälter 4 ist ein Förderer 6 angeordnet, der motorisch angetrieben ist und dessen Förderbahn sich zum überwiegenden Teil unterhalb des Badspiegels 7 der Flüssigkeit 5 im Flüssigkeitsbehälter 4 befindet. Dadurch tauchen die befüllten und verschlossenen Behältnisse 2, zum Beispiel Flaschen, bis zu einem gewissen Teil ihrer Höhe in die Flüssigkeit ein und werden auf diese Weise durch den Flüssigkeitsbehälter 4 stetig und kontinuierlich hindurchtransportiert.

Im Flüssigkeitsbehälter 4 befinden sich Schwinger, die im einzelnen noch beschrieben werden und durch die die Flüssigkeit 5 im Flüssigkeitsbehälter 4 in Schwingungen versetzt wird. Diese Schwingungen werden auch an die Behältnisse 2 und damit an das in den Behältnissen 2 befindliche, mit Gas, z. B. Kohlensäure, versetzte Getränk weitergegeben. Ist der Verschluß undicht, führt dies zu einem Austreten von Gas und eines Teils des Getränkes aus dem Behältnis 2, zum Beispiel aus einer Flasche, so daß die anschließend durch einen Förderer 8 weitertransportierten Behältnisse 2 beim Passieren einer Erkennungsstation 9 als nicht mehr vollständig befüllt erkannt werden. Bei der Erkennungsstation 9 kann es sich um eine handelsübliche Erkennungsstation dieser Art handeln, zum Beispiel um einen Gammakopf, der in üblicher Weise ausgebildet und angeordnet ist und der durch Steuer- und Regelvorrichtungen sowie elektrische Leitungen mit einer geeigneten Aussortiervorrichtung 10 verbunden ist. Bei dieser Aussortiervorrichtung kann es sich ebenfalls um eine vorbekannte Aussortiervorrichtung handeln, zum Beispiel um eine Pushereinheit. Die Aussortiervorrichtung 10 wird beim Passieren eines von der Erkennungsstation 9 als unvollständig befülltes erkanntes Behältnis 2 angesteuert und schleust das betreffende Behältnis 2, zum Beispiel eine Flasche, in üblicher Weise auf einen parallel zum Förderer 8 angeordneten Förderer 11 aus, der ebenso wie der Förderer 8 in Richtung X fördert und parallel und mit Abstand zum Förderer 8 angeordnet sein kann. Die Bandgeschwindigkeit des Förderers 8 kann der Bandgeschwindigkeit des Förderers 11 entsprechen. Alle Förderer 3, 6, 8 und 11 sind motorisch angetrieben.

Im Flüssigkeitsbehälter 4 wird somit in gewisser Weise ein Schütteln des im Behältnis 2 befindlichen Getränkes simuliert, so daß undicht verschlossene Behältnisse 2, zum Beispiel Flaschen, ermittelt werden können, da der gesamte Strom von mit Getränken befüllten Behältnissen 2 durch den Flüssigkeitsbehälter 4 transportiert und in Schwingungen versetzt wird. Auf diese Weise können zwar ordnungsgemäß befüllte, aber an sich undichte Behältnisse 2 die Erkennungsstation 9 nicht mehr passieren und verpackt zum Endverbraucher abtransportiert werden. Vielmehr werden undicht verschlossene Behältnisse 2, insbesondere Limonaden-, Getränke- und Bierflaschen, praktisch zu hundert Prozent ermittelt und aussortiert. Natürlich erkennt die Erkennungsstation 9 - wie schon bisher - auch unvollständig oder überhaupt nicht befüllte Behältnisse 2, insbesondere Flaschen. Dies ist aber dann nicht auf einen undichten Verschluß, sondern zum Beispiel auf einen fehlerhaften Befüllvorgang in der Befüllvorrichtung 1 zurückzuführen.

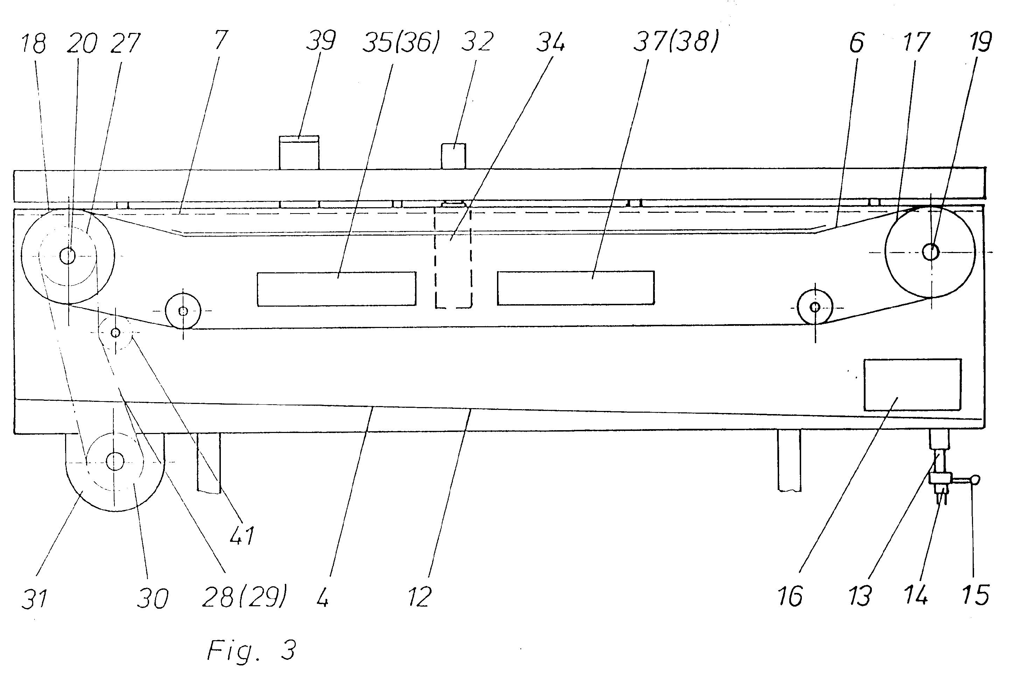

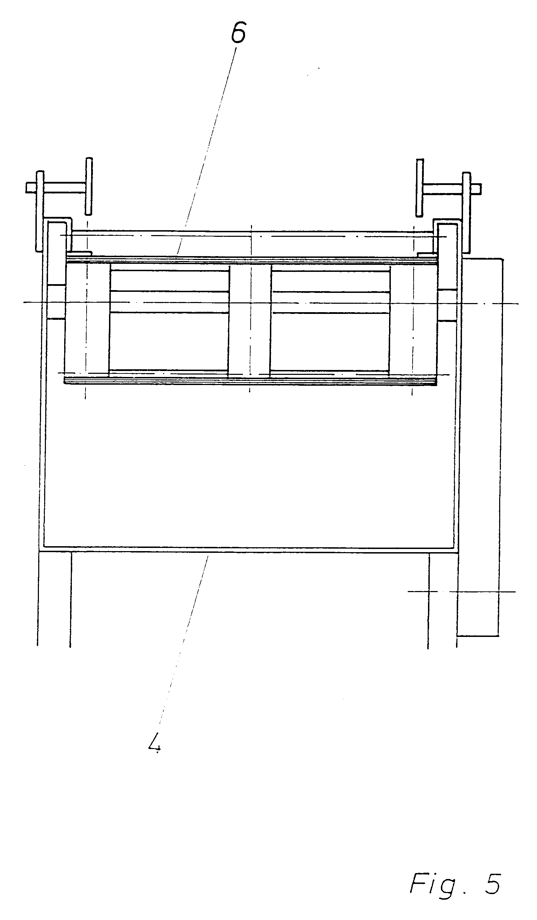

Wie aus den Figuren 3, 4 und 5 hervorgeht, besitzt der Flüssigkeitsbehälter 4 eine langgestreckte, im Quer- und Längsschnitt etwa rechteckförmige Gestaltung. Ein Boden 12 ist mit Gefälle zu einer Ablaßleitung 13 mit Absperrventil 14 angeordnet. Das Absperrventil 14 ist zum Beispiel mittels eines Handhebels 15 in Offen- und Schließstellung zu bewegen.

Mit dem Bezugszeichen 16 ist eine Verschlußklappe bezeichnet, die flüssigkeitsdicht eine Öffnung verschließt, durch die der Flüssigkeitsbehälter 4 zum Beispiel zu reinigen ist.

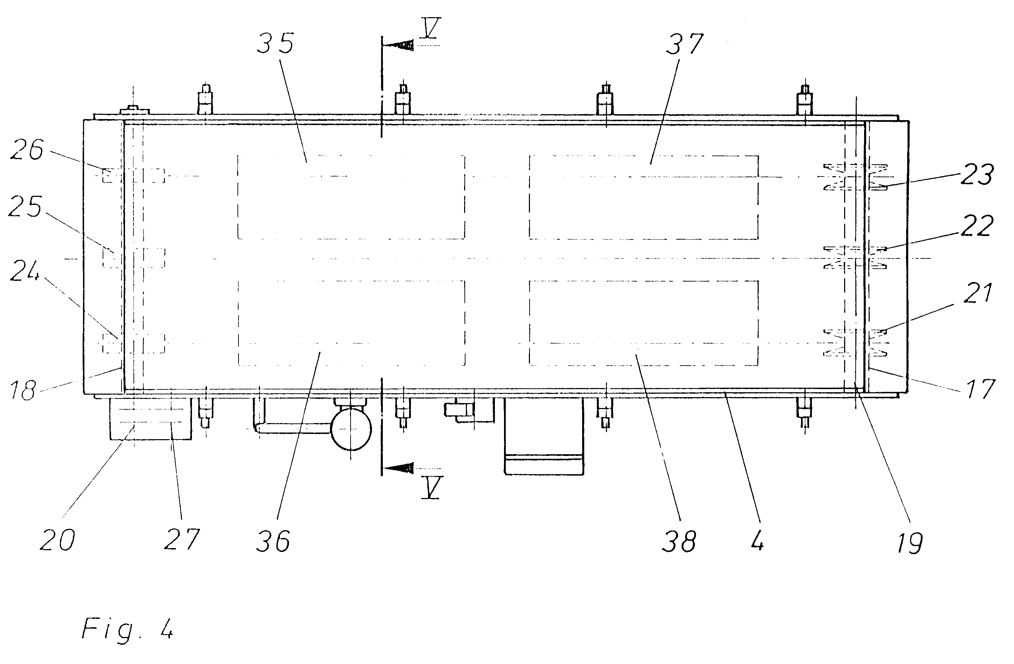

In dem Flüssigkeitsbehälter 4 ist der Förderer 6 angeordnet, der über in den Endbereichen des Flüssigkeitsbehälters 4 angeordneten Umkehrstationen 17 und 18 geführt ist. Diese Umkehrstationen 17, 18 besitzen jeweils eine Welle 19 bzw. 20, auf der jeweils bei der dargestellten Ausführungsform drei Flanschrollen 21, 22 und 23 drehfest angeordnet sind auf denen das Band des Förderers 6 aufruht. Am entgegengesetzten Ende kann eine entsprechende Anzahl von Antriebsrädern 24, 25 und 26 angeordnet sein. Die Antriebsräder 24, 25, 26 können als Kettenräder oder dergleichen ausgebildet und mit der Welle 20 getrieblich drehfest verbunden sein. Die Welle 20 ist einseitig nach außen verlängert (Figur 4) und besitzt an diesem verlängerten Endabschnitt fliegend gelagert ein Doppelkettenrad 27. Über das Doppelkettenrad 27 wird über Ketten 28, 29 durch einen Motor 30 die Welle 20 angetrieben, wobei der Motor 30 unterhalb des Flüssigkeitsbehälters 4 angeordnet ist.

Die Welle 20 ist aus dem Flüssigkeitsbehälter 4 abgedichtet herausgeführt.

Der Motor 30 ist in einer Lagerkonstruktion 31 hängend gelagert, die mit dem Flüssigkeitsbehälter 4 verbunden ist.

Mit dem Bezugszeichen 32 ist ein Höhenregulator bezeichnet, der den Badspiegel 7 der Flüssigkeit 5 im Flüssigkeitsbehälter 4 auf einen vorgegebenen Wert konstant oder annähernd konstant hält. Dem Höhenregulator 32 ist eine Schwimmervorrichtung 34 zugeordnet, durch die der Zulauf von Frischflüssigkeit, inbesondere Wasser, geregelt werden kann. Es ist auch möglich über den Höhenregulator 32 auch den Ablauf des Wassers zu steuern, so daß das Ventil 14 gegebenenfalls auch automatisch in Offen- und Zustellung gesteuert werden kann.

Mit den Bezugszeichen 35, 36 sowie 37, 38 sind Schwinger bezeichnet. Dabei handelt es sich um Ultraschallgeber, die zwischen 20 und 40 Kilohertz arbeiten und in ihrer Leistung jeweils zwischen 1600 und 3200 Watt regelbar sind. Diese Schwinger 35 bis 38 können durch eine im einzelnen nicht dargestellte Vorrichtung hinsichtlich ihrer Frequenz geregelt werden. Diese Frequenz kann auf das entsprechende Behältnis 2, zum Beispiel auf die Wanddicke von Flaschen 2, aber auch auf die in Flaschen 2 befindlichen Getränke abgestimmt sein, um den erforderlichen Schwingungseffekt in dem Getränk hervorrufen zu können.

Die Schwinger 35 bis 38 sind jeweils im gleichen Höhenbereich, parallel zueinander und mit gleichen Abständen zueinander angeordnet und gleichgroß und gleich leistungsfähig bei der dargestellten Ausführungsform ausgebildet. Selbstverständlich kann die Anzahl, die Größe und Höhenlage der einzelnen Schwinger je nach Einsatzfall variieren. Die Schwinger 35 bis 38 könnten auch in unterschiedlichen Höhenbereichen angeordnet sein. Des weiteren ist es nicht unbedingt erforderlich, die Schwinger 35 bis 38 parallel zueinander vorzusehen. Auch kann die Anzahl der Schwinger je nach Einsatzfall variieren.

Da die Schwinger 35 bis 38 im relativ geringen Abstand unterhalb des Badspiegels 7 angeordnet sind, können sie einen besonders guten und effektvollen Einfluß auf die in den Behältnissen 2 angeordneten Getränke ausüben.

Mit dem Bezugszeichen 39 ist eine Pumpe bezeichnet, die als Wasserpumpe ausgebildet sein kann und mittels derer Flüssigkeit 5, insbesondere Wasser, in den Flüssigkeitsbehälter 4 eingepumpt werden kann. Die Pumpe 39 kann mit der Schwimmervorrichtung 34 durch geeignete Steuermittel gekuppelt sein, damit die Pumpe 39 durch die Schwimmervorrichtung 34 eingeschaltet werden kann, wenn der Badspiegel 7 unter einen vorgegebenen, einstellbaren Wert absinkt. Die Pumpe 39 wird dann auch wieder ausgeschaltet, wenn die vorgegebene Badspiegelhöhe 7 erreicht ist.

Mit 41 ist ein Kettenspannrad und mit 40 ein Kettenschutz bezeichnet.

Bei allen Ausführungsformen erregt die wellenförmige Ausbreitung der Schwingungen in der Flüssigkeit, insbesondere Wasser, das zum Beispiel kohlsäurehaltige Füllgut in der Flasche oder dergleichen. Der entstehende Überdruck läßt eine undichte Flasche entleeren. Unabhängig von der Art der Undichtigkeit wird dadurch das Gebinde automatisch an der Füllstandskontrolle ausgesondert.

## Patentansprüche

1. Verfahren zum Feststellen der Dichtigkeit von Behältnissen wie Flaschen (2), Dosen, Fässer, die mit durch ein Gas versetzten Getränken, zum Beispiel mit Säften, Cola, Bier, Limonaden gefüllt und mit einem geeigneten Verschluß abgedichtet und verschlossen sind und die kontinuierlich durch ein Flüssigkeitsbad (5, 7) hindurchgeführt werden, wobei die Behältnisse (2) in dem Flüssigkeitsbad (5, 7) durch Schwinger (35, 36 bzw. 37, 38) die in einem Frequenzbereich von 8 bis 90 Kilohertz, vorzugsweise von 20 bis 40 Kilohertz arbeiten, bei einer Leistung von etwa 800 bis 6000 Watt, vorzugsweise 1600 bis 3200 Watt pro Schwinger (35, 36 bzw. 37, 38) in Schwingungen versetzt und anschließend einer Überprüfung auf eine vorgeschriebene Befüllung unterzogen und nicht ordnungsgemäß befüllte Behältnisse (2) aussortiert werden, wobei die Verweildauer der Behältnisse in dem Flüssigkeitsbad einige Sekunden, zum Beispiel 2 bis 20 s, vorzugsweise 3 bis 8 s, beträgt.

2. Einrichtung zum Durchführen des Verfahrens nach Anspruch 1 mit einem mit Flüssigkeit gefüllten Flüssigkeitsbehälter (4), in dem ein als Stetigförderer ausgebildeter Förderer (6) angeordnet ist, wobei in dem Flüssigkeitsbehälter (4) mehrere Schwinger (35, 36 bzw. 37, 38) angeordnet sind, die in einem Frequenzbereich von 8 bis 90 kHz, vorzugsweise von 20 bis 40 kHz arbeiten, bei einer Leistung von etwa 800 bis 6000 W, vorzugsweise 1600 bis 3200 W pro Schwinger (35, 36 bzw. 37, 38), die die Flüssigkeit (5), Behältnisse (2) und in den Behältnissen (2) befindlich Getränke in Schwingungen versetzen, bei einer Verweildauer der Behältnisse in dem Flüssigkeitsbad von einigen Sekunden, zum Beispiel 2 bis 20 s, vorzugsweise 3 bis 8 s, und mit einer Erkennungsstation (9) und einer Aussortiervorrichtung (10), wobei die Förderbahn des Förderers (6) allmählich aus einem Bereich aus oder oberhalb des Badspiegels (7) unter einem spitzen Winkel unterhalb des Badspiegels (7) in die Flüssigkeit (5) eintaucht und dann horizontal weiterverläuft und am anderen Ende ebenfalls unter einem spitzen Winkel aus der Flüssigkeit (5) herausfördernd den Badspiegel (7) durchdringt, und daß sich an den Umkehrstationen des im Flüssigkeitsbehälter (4) befindlichen Förderers (6) jeweils ein weiterer im Trockenbereich arbeitender Stetigförderer (3 bzw. 8) anschließt, wobei der eine weitere Förderer (3) die in einer Befüllvorrichtung (1) befüllten Behältnisse (2) heranfördert und der andere weitere Förderer (8) die Behältnisse (2) an der Erkennungsstation (9) und an der Aussortiervorrichtung (10) vorbeifördert, und daß sämtliche Stetigförderer (3, 6, 8, 11) durch getrennte motorische Antriebe angetrieben sind.

3. Einrichtung nach Anspruch 2, **dadurch gekennzeichnet**, daß die Höhe des Badspiegels (7) auf einen vorgegebenen Wert durch einen Höhenregulator (32) automatisch einregelbar ist, wobei der Höhenregulator (32) mit einer Pumpe (39) elektrisch verbunden ist, durch die Flüssigkeit (5) in den Flüssigkeitsbehälter (4) einpumpbar ist.

4. Einrichtung nach Anspruch 2 oder 3, **dadurch gekennzeichnet**, daß dem Flüssigkeitsbehälter (4) ein von Hand oder motorisch regelbarer Ablauf, zum Beispiel eine Ablaßleitung (13) zugeordnet ist, die ein Absperrventil (14) besitzt, das motorisch in Offen- und Schließstellung steuerbar ist.

5. Einrichtung nach Anspruch 2 oder einem der folgenden, **dadurch gekennzeichnet**, daß der im Flüssigkeitsbehälter (4) angeordnete Stetigförderer (6) durch einen Antrieb anzutreiben ist, der über einen Riemen- oder Kettentrieb mit einem Motor (30) getrieblich verbunden ist, der unterhalb des Flüssigkeitsbehälters (4) angeordnet ist, wobei die Welle (20) der in Förderrichtung hinteren Umkehrstation (18) seitlich aus dem Flüssigkeitsbehälter (4) abgedichtet herausgeführt ist und hier mit dem zum Motor (30) führenden Ketten- oder Riementrieb gekuppelt ist.

6. Einrichtung nach Anspruch 2 oder einem der folgenden, **dadurch gekennzeichnet**, daß der Flüssigkeitsbehälter (4) eine seitliche Verschlußklappe (16) aufweist, durch die eine Öffnung großen Querschnittes zu verschließen ist, wobei sich diese Öffnung im Bereich der Ablaßleitung (13) befindet.

7. Einrichtung nach Anspruch 2 oder einem der folgenden, **dadurch gekennzeichnet**, daß der Flüssigkeitsbehälter (4) kastenförmig ausgebildet ist und im Querschnitt eine etwa quadratische oder rechteckförmige und im Längsschnitt ebenfalls eine rechteckförmige Gestaltung aufweist und daß der Boden (12) des Flüssigkeitsbehälters (4) in Richtung auf die Ablaßleitung (13) geneigt zur Horizontalen verläuft.

8. Einrichtung nach Anspruch 2 oder einem der folgenden, **dadurch gekennzeichnet**, daß mehrere Flüssigkeitsbehälter (4) parallel und/oder hintereinander angeordnet sind.

9. Einrichtung nach Anspruch 2 oder einem der folgenden, **dadurch gekennzeichnet**, daß der Badbehälter eine effektive mit Flüssigkeit gefüllte Badlänge von 0,5 m bis 5 m, vorzugsweise von 1 m bis 1,50 m, besitzt.

10. Einrichtung nach Anspruch 2 oder einem der folgenden, **dadurch gekennzeichnet**, daß der Badflüssigkeit ein flüssigkeitentspannendes Mittel zugesetzt ist.

## Claims

1. Procedure for leak testing containers such as bottles (2), tins, barrels, filled with a gas-containing beverage for example juices, Cola, beer, lemonades and sealed with a suitable closure and transported continuously through a liquid bath (5,7) whereby the containers (2) are vibrated by agitators (35, 36 or 37, 38), running within a frequency range of 8 - 90 kilohertz, preferably 20 to 40 kilohertz, at a power level of approximately 800 to 6000 watts, preferably 1600 to 3200 watts per agitator (35, 36 or 37, 38) and then subjected to a test for a prescribed content, incorrectly filled containers (2) being separated out, in which the dwell time of the containers in the liquid bath is a few seconds, for example 2 to 20 s, preferably 3 to 8 s.

2. Device for implementing the procedure described in Claim 1 with a liquid container (4) filled with liquid, in which the conveyor (6) is designed as a continuous conveyor, in which several agitators ((35, 36 or 37, 38)) are arranged in the liquid container (4) working within a frequency range of 8 to 90 kHz, preferably 20 to 40 kHz, at a power level of approximately 800 to 6000 W, preferably 1600 to 3200 W per agitator ((35, 36 or 37, 38)), said agitators causing the liquid (5), containers (2) and the beverages in the containers (2) to vibrate during a dwell time, during which the containers are situated in the liquid bath, of a few seconds, for example 2 to 20s, preferably 3 to 8s, and with a checking station (9) and a separating device (10), whereby the conveyor belt of the conveyor (6) gradually travels from an area outside or above the level of the liquid (7) to submerge below the surface (7) of the liquid into the liquid (5) at a sharp angle and then runs horizontally to the other end at which point it is carried out of the liquid (5) breaking the surface (7) at a sharp angle and in which, at each of the reversing stations of the conveyor (6) arranged in the liquid container (4), a continuous conveyor (3 or 8) is contiguously arranged in the dry area, whereby the one conveyor (3) feeds the containers (2) filled in a filling device (1) and the other additional conveyor (8) transports the containers (2) to a checking station and past the separating device (10), and in which all continuous conveyors (3,6,8, 11) are driven by separate motors.

3. Device as in Claim 1, **in which** the level of the liquid surface (7) is automatically maintained at a preset level by a level regulator (32), in which the level regulator (32) is electrically connected to a pump (39) through which the liquid (5) can be pumped into the liquid container (4).

4. Device as in Claim 2 or 3, **in which** the liquid container (4) is provided with a regulated drain operated by hand or by motor, for example a drain pipe (13), that is fitted with a stopcock (14) that can be adjusted to the open or closed position by a motor.

5. Device as in Claim 2 or one of the following, **in which** the continuous conveyor (6) arranged in the liquid container (4) is to be driven by a drive, mechanically connected to a motor (30) via a belt or chain drive, located beneath the liquid container (4), in which the shaft (20) of the rearmost - in the direction of flow - reversing station (18) emerges from the liquid container (4) through a seal and is coupled there with the chain or belt drive leading to the motor (30).

6. Device as in Claim 2 or one of the following, **in which** the liquid container (4) is provided with a side flap (16) closing a large cross-section opening, said opening being located near the drain pipe (13).

7. Device as in Claim 2 or one of the following, **in which** the liquid container (4) is box-shaped and approximately square or rectangular in cross-section and likewise rectangular in longitudinal section and in which the bottom (12) of the liquid container (4) slopes down from the horizontal in the direction of the drain pipe (13).

8. Device as in Claim 2 or one of the following, **in which** several liquid containers (4) are arranged parallel to each other and/or in line.

9. Device as in Claim 2 or one of the following, **in which** the liquid container has an effective liquid filled length of 0.5 m to 5 m, preferably 1 m to 1.50 m.

10. Device as in Claim 2 or one of the following, **in which** the liquid contains a wetting agent.

## Revendications

1. Procédé et dispositif de contrôle de l'étanchéité de récipients fermés, remplis d'une boisson contenant du gaz, tels que bouteilles (2), boîtes, fûts, cette boisson étant par exemple du jus de fruits, du Cola, de la bière, des limonades, et étanchés et obturés au moyen d'un dispositif d'obturation approprié, et traversant en continu un bain de liquide (5, 7), les récipients fermés (2) présents dans le bain de liquide (5, 7) étant mis en oscillations par des oscillateurs (35, 36 et 37, 38) travaillant dans une plage fréquentielle comprise entre 8 et 90 kilohertz, de préférence entre 20 et 40 kilohertz, à une puissance comprise entre environ 800 et 6000 watts par oscillateur (35, 36 et 37, 38), de préférence entre 1600 et 3200 watts, et subissant ensuite un contrôle d'exactitude du remplissage prescrit, les récipients fermés incorrectement remplis (2) étant rebutés, la durée de séjour des récipients fermés dans le bain de liquide s'élevant à quelques secondes, par exemple entre 2 et 20 secondes, de préférence entre 3 et 8 secondes.

2. Dispositif de réalisation du procédé selon la revendication 1 comportant un réservoir (4) rempli de liquide dans lequel est disposé un convoyeur (6) en forme de convoyeur permanent, plusieurs oscillateurs (35, 36 et 37, 38) étant disposés dans le réservoir de liquide (4) et travaillant dans une plage de fréquence comprise entre 8 et 90 kHz, de préférence entre 20 et 40 kHz, à une puissance comprise entre environ 800 et 6000 W par oscillateur (35, 36 et 37, 38), de préférence entre 1600 et 3200 W, ces oscillateurs faisant entrer en oscillations le liquide (5), les récipients fermés (2) et les boissons situées dans les récipients (2), les récipients séjournant dans le bain de liquide pendant quelques secondes, par exemple entre 2 et 20 secondes, de préférence entre 3 et 8 s, et comportant un poste de détection (9) et un dispositif de rebutage (10), la piste du convoyeur (6) descendant progressivement selon un angle aigu vers le niveau du bain (7) depuis un zone ou depuis le dessus du niveau du bain (7) puis pénétrant dans le liquide (5), poursuivant sa trajectoire à l'horizontale et ressortant du liquide (5) à l'autre extrémité et retraversant le bain de liquide (7) également selon un angle aigu, et en ce qu'à chaque poste de retournement du convoyeur (6) situé dans le réservoir de liquide (4) est juxtaposé un convoyeur constant (3 et 8) travaillant dans la zone sèche, l'un de ces convoyeurs supplémentaires (3) approchant les récipients fermés (2) remplis par un dispositif de remplissage (1) et l'autre convoyeur supplémentaire (8) transportant les récipients fermés (2) le long du poste de détection (9) et le long du dispositif de rebutage (10), et en ce que tous les convoyeurs permanents (3, 6, 8, 11) sont entraînés par des moteurs séparés.

3. Dispositif selon la revendication 2, **caractérisé en ce que** la hauteur du bain de liquide (7) est réglable automatiquement, sur une hauteur imposée, au moyen d'un régulateur de hauteur (32), ce dernier (32) étant électriquement relié à une pompe (39) permettant de pomper le liquide (5) dans le réservoir de liquide (4).

4. Dispositif selon la revendication 2 ou 3, **caractérisé en ce qu**'au réservoir de liquide (4) est affecté un dispositif d'évacuation à réglage manuel ou motorisé, par exemple une conduite de vidange (13), comportant une vanne de fermeture (14) dont les positions ouverte et fermée sont pilotables par moteur.

5. Dispositif selon la revendication 2 ou l'une des revendications suivantes, **caractérisé en ce que** le convoyeur permanent (6) situé dans le réservoir de liquide (4) doit être entraîné par un mécanisme relié à un moteur (30) via une courroie ou une chaîne, lequel (30) est disposé en-dessous du réservoir de liquide (4), l'arbre (20) du poste de renvoi arrière (18) dans le sens du convoyage sortant de manière étanchée du réservoir de liquide (4) et étant accouplé ici au mécanisme d'entraînement par chaîne ou par courroie aboutissant au moteur (30).

6. Dispositif selon la revendication 2 ou l'une des revendications suivantes, **caractérisé en ce que** le réservoir de liquide (4) présente un clapet latéral (16) permettant d'obturer un orifice de grande section, cet orifice se trouvant dans la zone de la conduite de vidange (13).

7. Dispositif selon la revendication 2 ou l'une des revendications suivantes, **caractérisé en ce que** le réservoir de liquide (4) est en forme de caisson dont la coupe transversale est approximativement carrée ou rectangulaire, et la coupe longitudinale est également rectangulaire, et en ce que le fond (12) du réservoir de liquide (4) est incliné par rapport à l'horizontale en direction de la conduite de vidange (13).

8. Dispositif selon la revendication 2 ou l'une des revendications suivantes, **caractérisé en ce que** plusieurs réservoirs de liquide (4) sont disposés parallèlement les uns aux autres et/ou les uns derrière les autres.

9. Dispositif selon la revendication 2 ou l'une des revendications suivantes, **caractérisé en ce que** le réservoir du bain présente une longueur de bain effectivement remplie de liquide comprise entre 0,5 et 5 m, de préférence entre 1 et 1,50 m.

10. Dispositif selon la revendication 2 ou l'une des revendications suivantes, **caractérisé en ce qu**'au liquide du bain est rajouté un produit qui en abaisse la tension superficielle.
